# EUROPÄISCHE PATENTSCHRIFT

(11) **EP 2 647 441 B1**
(45) Veröffentlichungstag und Bekanntmachung des Hinweises auf die Patenterteilung: **13.07.2016**
(21) Anmeldenummer: 13001624.9
(22) Anmeldetag: 28.03.2013
(51) Int. Cl.: B01F 5/04, B01F 3/04, B01F 5/10, C02F 1/24, B03D 1/14, B03D 1/24, A01K 63/04

(54) **Einrichtung zum Reinigen von Aquarienwasser**
Apparatus for cleaning aquarium water
Dispositif de nettoyage d'eau d'aquarium

(30) Priorität: 02.04.2012 DE 102012006596
(43) Veröffentlichungstag der Anmeldung: 09.10.2013
(73) Patentinhaber: ERWIN SANDER ELEKTROAPPARATEBAU GMBH, 31311 Uetze-Eltze (DE)
(72) Erfinder: Sander, Martin, 31311 Uetze-Eltze (DE)
(74) Vertreter: Friedrich, Andreas

(56) Entgegenhaltungen:
- DE-B- 1 289 353
- DE-B1- 2 914 392
- US-A- 2 938 629
- US-B1- 6 869 530

## Beschreibung

Die Erfindung betrifft eine Einrichtung zum Reinigen von Aquarienwasser aus einer Aquakulturanlage, mit einem aus einem das Wasser aufnehmenden Reaktor und einem darüber angeordneten Schaumsammelraum bestehenden Flotationsturm und einem aus einer Düse und zumindest einem der Düse in Strömungsrichtung nachgeordneten Mischkanal bestehenden Injektor, der eine außerhalb des Flotationsturmes angeordnete Wassereintrittsseite und eine in Strömungsrichtung dahinterliegende Wasseraustrittsseite aufweist.

Eine solche Einrichtung ist beispielsweise aus der DE 298 08 690 U1 bekannt. Flotationstürme dienen zur Reinigung/Klärung von Aquariumwasser, insbesondere von Wasser einer Aquakulturanlage. Das biologisch belastete Wasser wird in den Reaktor des Flotationsturmes eingeleitet. Über eine Pumpe wird aus dem Reaktor Wasser abgesaugt und dem Injektor zugeführt, wo es feinstperlig mit Luft vermischt und dem Reaktor dann wieder zugeführt wird. Die feinstperlige Luft stellt Kontakt zu den im Wasser befindlichen Eiweißverbindungen und Schmutzpartikeln her. Die nach oben im Reaktor aufsteigenden Luftblasen fördern dann diese Eiweißverbindungen und Schmutzpartikel in den oberhalb des Reaktors angeordneten Schaumsammeiraum. Der Schaumsammeiraum kann - wie beispielsweise in der DE 44 16 587 C1 offenbart - trichterförmig ausgebildet sein und mündet in das nach oben verlaufende Schaumrohr. Über das Schaumsammelrohr und das Schaumrohr gelangen die Proteine und Schmutzpartikel in einen Schaumsammelbehälter, von wo aus sie dann dem Abwasser zugeführt oder auf sonstige Weise entsorgt werden. Das Wasser wird dann im Umlauf gereinigt der Aquakulturanlage wieder zugeführt. Für das Verständnis ist der Begriff Aquariumwasser und Wasser einer Aquakulturanlage als Synonym zu sehen.

In der Düse des Injektors wird die Wassergeschwindigkeit sehr stark erhöht. Dadurch verringert sich der hydrostatische Druck soweit, dass er geringer ist als der umgebende Luftdruck. Mittels des entstehenden Unterdruckes wird ein Luftvolumenstrom angesaugt, der mit dem Wasser vermischt und in den Reaktor des Flotationsturmes oder Abschäumers eingeleitet wird. Beim Austritt des Wasserstrahls aus der Düse wird in Folge des Unterdrucks die Luft durch einen zumeist seitlich gelegenen Lufteintrittsanschluss in den Injektor eingesaugt. Im Freistrahl wie auch in der sich anschließenden Mischkammer, die auch Stabilisatorrohr genannt wird, werden Wasser und Luft innig miteinander vermischt. Ein Diffusor sorgt dafür, dass die Gemischgeschwindigkeit innerhalb eines schlank konstruierten Konus langsam aber stetig wieder auf ein dem folgenden Prozess geeignetes Maß reduziert wird. Der aus der Düse, dem Mischkanal und dem sich hieran anschließenden Diffusor bestehende Injektor ist außerhalb des Flotationsturmes angeordnet. Aufgrund des geringen Winkels des Konus ist der Diffusor ein die Optik und auch den Preis bestimmendes konstruktives Element des Injektors.

Am Ort des Lufteintrages im Injektor wird CO₂ ausgetragen. Dadurch wird das Kalk-/Kohlensäuregleichgewicht verschoben, Kalk fällt aus und lagert sich besonders stark im Bereich um die Düse und am Düsenmund ab. Je nach Umfang des Kalkausfalls kann die Düse sogar zuwachsen. Um deutliche Leistungsminderungen zu vermeiden, ist dieser Teil des Injektors besonders wartungsrelevant.

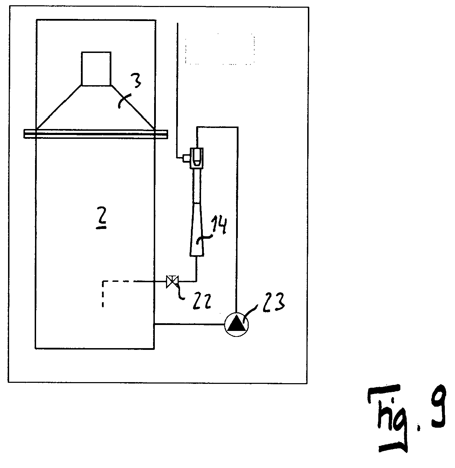

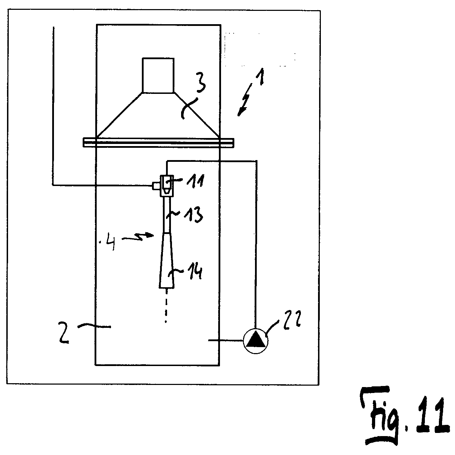

Der Injektor kann senkrecht oder parallel zum in der Regel zylindrischen Flotationsturm angeordnet sein. Die senkrechte Bauweise bietet den Vorteil, dass die Düse hydrodynamisch günstig nahe dem Wasserspiegel des Reaktors liegt und nur ein geringer Platzbedarf benötigt wird. Je nach Bauart des Injektors liegen in Strömungsrichtung vor ihm ein bis zwei rechte Winkel (vgl. Figuren 9 und 11), die zu einem erheblichen Druckverlust führen. Aufgrund dieses Druckverlustes muss der Vordruck der Pumpe, mit der das Wasser aus dem Reaktor gesaugt und dem Injektor zugeführt wird, erhöht oder die Luftansaugleitung reduziert werden. Die außerdem in einem rechten Winkel einer Leitung entstehenden Wirbel führen zu einer Koaleszenz von Luftblasen, die dadurch größer werden. Die Grenzfläche zwischen Blasen und Wasser bzw. Feststoffen wird kleiner. Der Wirkungsgrad des Abschäumers sinkt. Die Homogenität des Blasenschwarmes ist deutlich gestört.

Wird der Injektor in einer horizontalen Lage an den Reaktor angeschlossen, können rechte Winkel hinter der Wasseraustrittsseite, die den Wirkungsgrad reduzieren, vermieden werden. Nachteilig bei einer solchen Anordnung ist aber der hohe Platzbedarf, da die volle Länge des Injektors vor dem Reaktor liegt. In der Praxis ist eine solche Ausführung deshalb kaum umsetzbar. Des Weiteren liegt die Düse des Injektors hydrodynamisch weit unterhalb des Wasserspiegels. Damit wird ein erhöhter Vordruck notwendig, um einen gewünschten Luftvolumenstrom zu gewährleisten.

Es ist auch bekannt, den Injektor vollständig in den Reaktor zu integrieren. Diese Bauweise ist sehr platzsparend. Außerdem legt die Injektordüse hydrodynamisch günstig in der Nähe des Wasserspiegels. Nachteilig bei dieser Ausführungsform ist aber, dass sowohl die Düse des Injektors als auch die Ansaugkammer für Wartungszwecke nur mit einem erheblichen Montageaufwand und nur bei völlig entleertem Reaktor zugänglich sind.

Aus der US 6,869,530 B1 ist ein Aquarienfilter bekannt, der in ein Aquarium eingesetzt werden kann. Dieser Filter besteht aus einem Gehäuse, in das unterem anderem ein Injektor eingesetzt ist. Der Filter wird in das Aquarium eingesetzt und läuft dann mit Wasser voll. An dem Injektor ist ein Schlauch angeschlossen, über den Luft angesaugt wird.

In der US 2,938,629 A wird eine Einrichtung zur Separation von Mineralien mittels Schwimmaufbereitung offenbart. Hierzu ist ein Behälter mit Seitenwänden vorgesehen, in den über einen Injektor Druckwasser eingegeben wird, das in einem Rohr mit Luft vermischt wird. Die Mischkammer, in der das Wasser mit der Luft vermischt wird, liegt vollständig außerhalb des Reaktors.

Die DE 29 14 392 B1 offenbart ein Verfahren und eine Vorrichtung zum Deinken von Faserstoffsuspensionen, wie sie aus Altpapier hergestellt werden. Mit dieser Vorrichtung soll die Druckfarbe aus der Zellulosepulpe entfernt werden. Über einen mit einem Diffusor versehenen Injektor wird Luft dem Wasser zugeführt, wobei sich die Mischkammer außerhalb des Düsenkörpers und vollständig außerhalb des Behälters befindet. Das mit Luft vermischte Wasser wird dann in die Suspension eingeblasen.

Die DE 12 89 353 B offenbart ein Eiweißabscheidegerät zur Reinigung von Seewasser aus einem Aquarium mit einem aufrecht stehenden Steigrohr und einem auf dieses aufgesetzten Schaumsammelbehälter. Das Steigrohr ist auf einen Verwirbelungstopf aufgesetzt, in den ein Luft-Seewasser-Strahl einführbar ist und der einen mit einer Wasserberuhigungseinrichtung versehenden Seewasserablass aufweist.

Von dieser Problemstellung ausgehend soll die eingangs beschriebene Einrichtung so verbessert werden, dass sie strömungstechnisch günstig und für Wartungszwecke leicht zugänglich ausgebildet ist.

Zur Problemlösung zeichnet sich eine gattungsgemäße Einrichtung zum Reinigen von Wasser dadurch aus, dass der Mischkanal zum überwiegenden Teil innerhalb des Reaktors und unterhalb der Wasserlinie und die Düse außerhalb des Reaktors angeordnet sind, und dass im Injektor in Strömungsrichtung hinter der Düse und außerhalb des Flotationsturmes eine Absperrvorrichtung, vorzugsweise ein Kugelhahn, angeordnet ist.

Durch diese Ausgestaltung liegen im Grunde genommen alle Teile des Injektors bis auf die Düse außerhalb des Flotationsturmes. Dabei liegt der Erfindung die Erkenntnis zugrunde, dass der Diffusor nur dann seine Berechtigung hat, wenn der Injektor in eine Rohrleitung integriert ist und das Gemisch in eine weiterführende Rohrleitung einmündet. Bei der Anwendung innerhalb des Reaktors ist dies aber nicht gegeben. Das Wasser-Luft-Gemisch tritt in ein zum Vergleich zur Rohrleitung großes Volumen aus. Ein Diffusor ist dann nicht notwendig, weil die Aufgabe nicht mehr darin besteht, dass Gemisch aus einer ersten Strömungssituation in eine zweite Strömungssituation zu überführen. Vielmehr muss der Austrag des Gemisches so erfolgen, dass ein möglichst homogener Blasenstrom gleichmäßig über den Reaktorquerschnitt verteilt wird und weitgehend ruhig aufsteigen kann. Natürlich kann auch bei dem erfindungsgemäßen Einbau mit der Wasseraustrittsseite innerhalb des Reaktors auch noch ein Diffusor im Injektor verwendet werden, dieser verlöre aber seine Funktion und würde nur den konstruktiven Aufwand bzw. die Herstellkosten erhöhen.

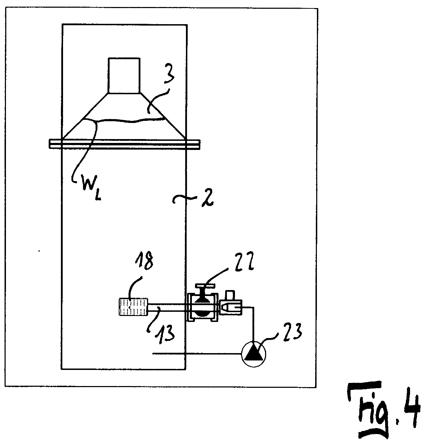

Für Wartungsarbeiten an der Düse wird die Absperreinrichtung (vgl. Figur 4) geschlossen, sodass kein Wasser aus dem Reaktor austreten kann. Ein Entleeren des Reaktors um den Injektor warten zu können, ist deshalb nicht nötig.

Die Hauptfunktion eine Flotationsturmes (Abschäumers) ist seine Funktion als Flotationsaggregat. Möglichst feine Luftblasen müssen mit einem möglichst homogenen Durchmesser hergestellt werden. Es hat sich gezeigt, dass optimale Verhältnisse dann erreicht werden, wenn die Düse des Injektors in ein zylindrisches Stabilisationsrohr (Mischkanal) mündet. In diesem Stabilisationsrohr bildet das Gemisch eine stabile Zweiphasenströmung, bei der es sich um eine hoch turbulente Strömung handelt. Wichtig ist es, die innere Turbulenz des Systems so niedrig wie möglich zu halten. Eine optimale Vermischung trennt an der Vermischungsstelle die Phasen dergestalt auf, dass der Blasenstrom im Wesentlichen nach oben aufsteigen kann, während der Wasserstrom nach unten abstreichen soll. Um diese Trennung zu erreichen, ist vorzugsweise an der Wasseraustrittsseite des Mischkanals ein an seinem freien Ende geschlossenes und in seiner Umfangswadung geschlitztes Rohr angeordnet. Diese Art der Trennung wird vorzugsweise für Injektoren verwendet, bei denen die Wasseraustrittsseite horizontal oder in einem Winkel bis zu 45° gegenüber der Horizontalen geneigt im Reaktor angeordnet ist.

Wird die Wasseraustrittseite senkrecht oder in einem gegenüber der Vertikalen in einem Winkel bis zu 45° geneigten Winkel im Reaktor angeordnet, ist vorzugsweise in Strömungsrichtung hinter der Wasseraustrittsseite eine Prallplatte am Mischkanal angeordnet.

Vorzugsweise besteht der Mischkanal in Strömungsrichtung hinter der Düse aus einem Rohr mit konstantem Querschnitt. Die Länge dieses Rohres ist beliebig. Aus dem offenen Rohr tritt das Wasser-Luft-Gemisch dann aus und wird auf die Prallplatte geleitet, von der es dann seitlich abstrahlt. Auf dieses Rohr kann anstatt der Prallplatte das zuvor genannte geschlitzte Rohr aufgesetzt werden, sodass das freie Ende des Rohres dann verschlossen ist.

Mit Hilfe einer Zeichnung sollen Ausführungsbeispiele der Erfindung nachfolgend näher beschrieben werden. Es zeigen:

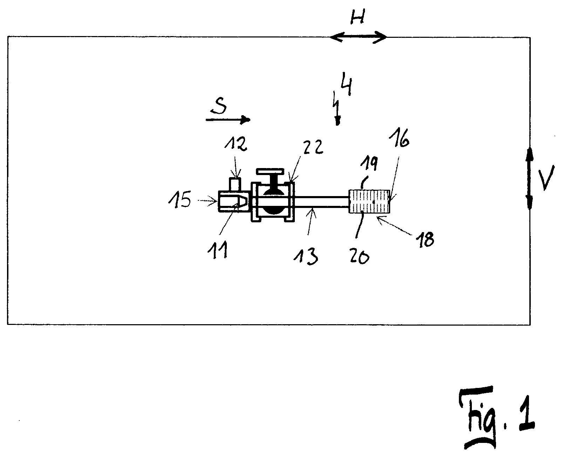

- Figur 1 -: eine erste Ausführungsform des Injektors;

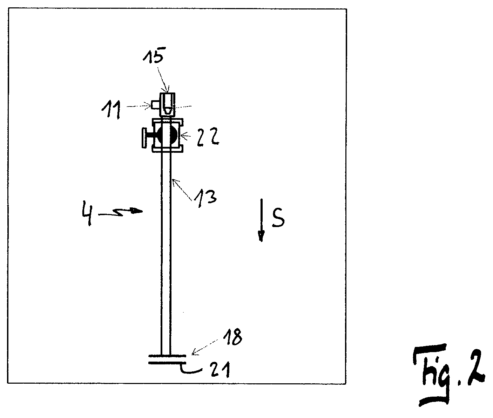

- Figur 2 -: eine zweite Ausführungsform des Injektors;

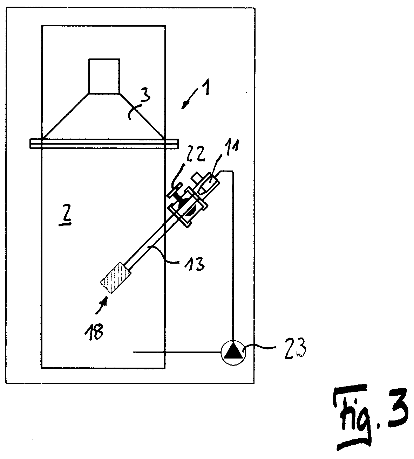

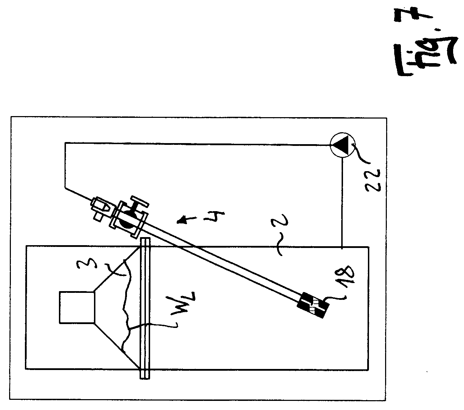

- Figuren 3 bis 7 -: verschiedene Einbausituationen des Injektors nach Figur 1;

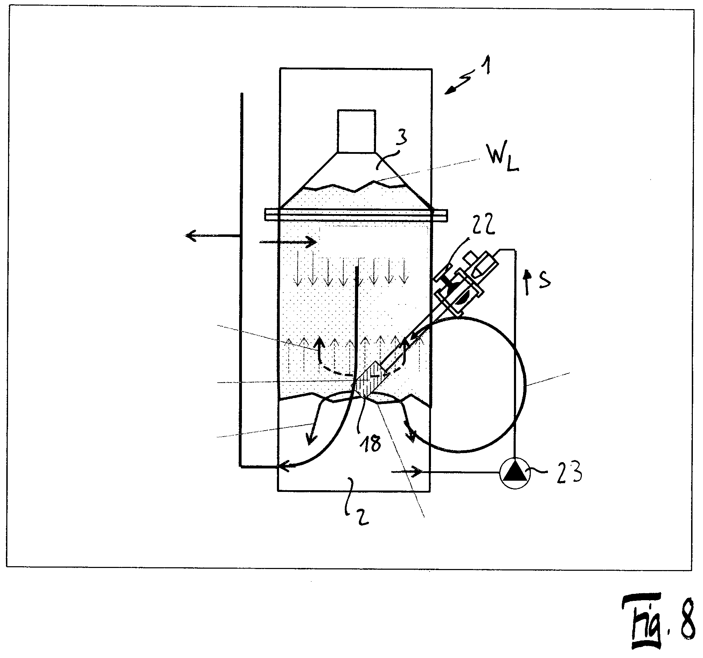

- Figur 8 -: die schematische Darstellung des Strömungsverlaufs in einem Flotationsturm;

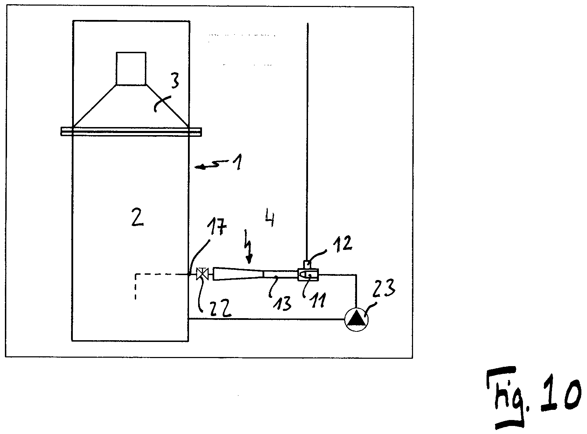

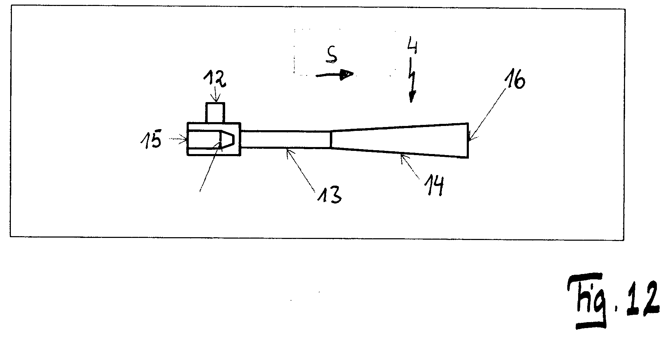

- Figuren 9 bis 12 -: einen Injektor nach dem Stand der Technik.

Der Flotationsturm 1 besteht aus dem Reaktor 2 und der darüber angeordneten Schaumkammer 3. Die aus dem Stand der Technik bekannten Injektoren 4 sind außerhalb des Flotationsturmes 1 entweder parallel zum Reaktor 2 oder senkrecht dazu angeordnet. Über eine Pumpe 23 wird Wasser aus dem Reaktor 2 abgesaugt und zur Wassereintrittsseite 15 des Injektors 4 geleitet. Über die Düse 11 wird die Strömungsgeschwindigkeit des Wassers erhöht und durch den dabei entstehenden Unterdruck wird über den Ansaugkanal 12 Luft angesaugt und in dem in Strömungsrichtung S der Düse 11 nachgeordneten Mischkanal 13 mit dem Wasser vermischt. Im sich an den Mischkanal 13 anschließenden Diffusor 14, der sich konisch erweitert, wird die Geschwindigkeit im Wasser-Luft-Gemisch wieder reduziert und von der Wasseraustrittsseite 16 ausgehend über eine Leitung 17 wieder dem Reaktor 2 zugeführt. Da durch den Injektor 4 verunreinigtes Wasser geleitet wird, muss insbesondere die Düse 11 von Zeit zu Zeit gereinigt werden, was bei den außen liegenden Injektoren 4 einfach möglich ist. Bei dem innerhalb des Reaktors 2 angeordneten Injektor 4 (vgl. Figur 11) ist dies nur möglich, wenn der Reaktor 2 komplett entleert ist, was die Wartungsarbeiten erschwert.

Der erfindungsgemäße Injektor 4 weist keinen Diffusor, sondern nur einen Mischkanal 13 auf und seine Wasseraustrittsseite 16 liegt innerhalb des Reaktors 2. An dem Ende des nahezu vollständig innerhalb des Reaktors 2 unter der Wasserlinie W_{L} liegenden Mischkanales 13 ist ein Blasenverteiler 18 vorgesehen, der als an einem Ende geschlossenes Rohr 19 ausgebildet sein kann, dass über seine Umfangswandung eine Vielzahl von Schlitzen 20 aufweist, die eine Breite von etwa 3 mm bis 5 mm aufweisen. Das Rohr 19 kann auf den Mischkanal 13, der einen konstanten Querschnitt aufweist, aufgesetzt oder mit diesem fest verbunden sein.

Der Blasenverteiler 18 kann auch als Prallplatte 21 ausgebildet sein. Aus dem Mischkanal 13 strömt das Wasser-Luft-Gemisch dann aus und trifft auf die Prallplatte 21, von der aus es dann radial in den Reaktor 2 hineinströmt.

Im Mischkanal 13 ist in beiden Ausführungsbeispielen hinter der Düse 11 angeordnet. Der rohrförmige Mischkanal 13 ist in den Reaktor 2 des Flotationsturmes 1 hineingeführt, sodass die Wasseraustrittsöffnung 16 im Reaktor liegt. Der Kugelhahn 22 und die Düse 11 liegen außerhalb des Flotationsturmes 1. Zum Reinigen der Düse 11 wird der Kugelhahn 22 verschlossen, sodass dann kein Wasser aus dem Reaktor 2 austreten kann. Wenn der Kugelhahn unmittelbar an der Außenwand des Flotationsturmes 1 angebracht wird, kann der Mischkanal 13 vollständig innerhalb des Reaktors liegen. Bis auf die Düse sind dann alle Bauteile des Injektors innerhalb des Reaktors 2 und unterhalb der Wasserlinie W_{L} angeordnet.

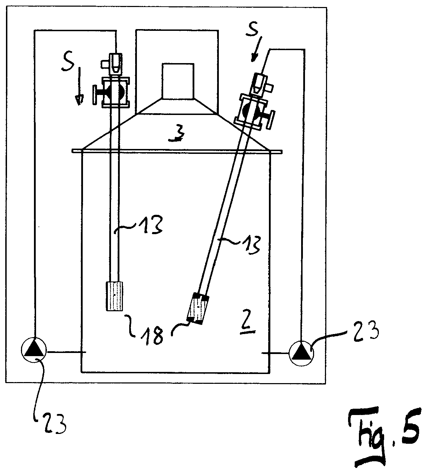

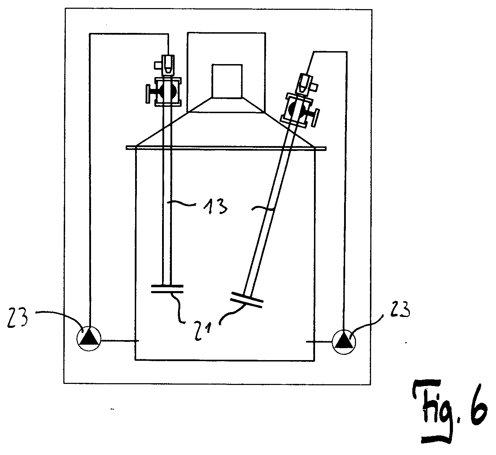

Der Injektor 4 mit dem als geschlitztes Rohr 19 ausgebildeten Blasenverteiler 18 eignet sich besonders für den waagrechten oder in einem Winkel α bis zu 45° gegenüber der Waagrechten geneigten Einbau in den Reaktor 2. Der mit der Prallplatte 21 versehene Blasenverteiler 18 eignet sich besonders für Injektoren 4, die vertikal oder in einem Winkel bis zu 45° gegenüber der Vertikalen geneigt eingebaut werden. Die Länge des Mischkanals 13 ist bei beiden Ausführungsformen beliebig. Ihr Optimum kann durch Versuche ermittelt werden und ist in erster Linie abhängig von der Größe des Reaktors 2 und der Förderleistung der Pumpe 23. Wie Figuren 5 und 6 zeigen, können auch mehrere Injektoren 4 im Reaktor 2 enden. Je höher die Düse 11 gegenüber dem Wasserspiegel im Reaktor 2 liegt, umso geringer ist der Wasserdruck, dem sie unterliegt. Die Leistung bei der Luftansaugung wird dadurch verbessert, die Förderleistung der Pumpe 23 muss aber entsprechend erhöht werden.

### Bezugszeichenliste

- 1: Flotationsturm
- 2: Reaktor
- 3: Schaumsammelrohr
- 4: Injektor
- 11: Düse
- 12: Ansaugstutzen
- 13: Mischkanal
- 14: Diffusor
- 15: Wassereintrittsseite
- 16: Wasseraustrittsseite
- 17: Leitung
- 18: Blasenverteiler
- 19: Rohr
- 20: Schlitz
- 21: Prallplatte
- 22: Kugelhahn/Absperrvorrichtung
- 23: Pumpe
- H: Horizontale/Waagrechte
- V: Vertikale
- W_{L}: Wasserlinie

## Patentansprüche

1. Einrichtung zum Reinigen von Aquarienwasser aus einer Aquakulturanlage, mit einem aus einem das Wasser aufnehmenden Reaktor (2) und einem darüber angeordneten Schaumsammelraum (3) bestehenden Flotationsturm (1) und einem aus einer Düse (11) und zumindest einem der Düse (11) in Strömungsrichtung (S) nachgeordneten Mischkanal (13) bestehenden Injektor (4), der eine außerhalb des Flotationsturmes (1) angeordnete Wassereintrittsseite (15) und eine in Strömungsrichtung (S) dahinterliegende Wasseraustrittsseite (16) aufweist, **dadurch gekennzeichnet, dass** der Mischkanal (13) zum überwiegenden Teil innerhalb des Reaktors (2) und unterhalb der Wasserlinie (W_{L}) und die Düse (11) außerhalb des Reaktors (2) angeordnet sind, und dass im Injektor (4) in Strömungsrichtung (S) hinter der Düse (11) und außerhalb des Flotationsturmes (1) eine Absperreinrichtung (22) angeordnet ist.

2. Einrichtung nach Anspruch 1, **dadurch gekennzeichnet, dass** die Absperreinrichtung (22) ein Kugelhahn ist.

3. Einrichtung nach Anspruch 1, **dadurch gekennzeichnet, dass** an der Wasseraustrittsseite (16) des Mischkanals (13) ein an seinem freien Ende geschlossenes und in seiner Umfangswandung geschlitztes Rohr (19) angeordnet ist.

4. Einrichtung nach Anspruch 3, **dadurch gekennzeichnet, dass** eine Mehrzahl von Schlitzen (20) in der Umfangswandung des Rohres (19) vorgesehen ist.

5. Einrichtung nach Anspruch 1, **dadurch gekennzeichnet, dass** in Strömungsrichtung (S) hinter der Wasseraustrittsseite des Mischkanals (13) eine Prallplatte (21) angeordnet ist.

6. Einrichtung nach Anspruch 1, **dadurch gekennzeichnet, dass** der Mischkanal (13) in Strömungsrichtung (S) hinter der Düse (11) aus einem Rohr mit konstantem Querschnitt besteht.

7. Einrichtung nach Anspruch 1 oder 6, **dadurch gekennzeichnet, dass** der Mischkanal (13) in einem gegenüber der vertikalen (V) geneigten Winkel (α) in den Reaktor (2) geführt ist.

## Claims

1. Device for cleaning aquarium water from an aquaculture facility, having a flotation tower (1) consisting of a water-receiving reactor (2) and a foam collection chamber (3) arranged thereabove, and an injector (4) consisting of a nozzle (11) and at least one mixing duct (13) arranged downstream of the nozzle (11) in the direction of flow (S), said injector (4) having a water inlet side (15) arranged outside the flotation tower (1) and a water outlet side (16) located downstream thereof in the direction of flow (S), **characterized in that** the mixing duct (13) is arranged predominantly inside the reactor (2) and beneath the waterline (W_{L}) and the nozzle (11) is arranged outside the reactor (2), and **in that** a shut-off device (22) is arranged in the injector (4) downstream of the nozzle (11) in the direction of flow (S) and outside the flotation tower (1).

2. Device according to Claim 1, **characterized in that** the shut-off device (22) is a ball valve.

3. Device according to Claim 1, **characterized in that** a tube (19) that is closed at its free end and has a slotted circumferential wall is arranged at the water outlet side (16) of the mixing duct (13).

4. Device according to Claim 3, **characterized in that** a plurality of slots (20) are provided in the circumferential wall of the tube (19).

5. Device according to Claim 1, **characterized in that** a baffle plate (21) is arranged downstream of the water outlet side of the mixing duct (13) in the direction of flow (S).

6. Device according to Claim 1, **characterized in that**, downstream of the nozzle (11) in the direction of flow (S), the mixing duct (13) consists of a tube with a constant cross section.

7. Device according to Claim 1 or 6, **characterized in that** the mixing duct (13) is guided into the reactor (2) at an inclined angle (α) with respect to the vertical (V).

## Revendications

1. Dispositif pour le nettoyage de l'eau d'aquarium provenant d'une installation d'aquaculture, comprenant un réacteur (2) qui reçoit l'eau et une tour de flottation (1) constituée d'une chambre de collecte de mousse agencée au-dessus de celui-ci, et un injecteur (4) constitué par une buse (11) et par au moins un canal de mélange (13) agencé en aval de la buse (11) dans la direction d'écoulement (S), l'injecteur comprenant un côté d'entrée d'eau (15) agencé à l'extérieur de la tour de flottation (1) et un côté de sortie d'eau (16) disposé derrière celui-ci dans la direction d'écoulement (S), **caractérisé en ce que** le canal de mélange (13) est agencé en majeure partie à l'intérieur du réacteur (2) et au-dessous du niveau d'eau (W_{L}) et la buse (11) est agencée à l'extérieur du réacteur (2), et **en ce qu'**un moyen d'isolement (22) est agencé dans l'injecteur (4) derrière la buse (11) en direction d'écoulement (S) et à l'extérieur de la tour de flottation (1).

2. Dispositif selon la revendication 1, **caractérisé en ce que** le moyen d'isolement (22) est un robinet à boisseau sphérique.

3. Dispositif selon la revendication 1, **caractérisé en ce qu'**un tube (19) fermé à son extrémité libre et fendu dans sa paroi périphérique est agencé sur le côté de sortie d'eau (16) du canal de mélange (13).

4. Dispositif selon la revendication 3, **caractérisé en ce qu'**il est prévu une pluralité de fentes (20) dans la paroi périphérique du tube (19).

5. Dispositif selon la revendication 1, **caractérisé en ce qu'**une plaque à impact (21) est agencée derrière le côté de sortie d'eau du canal de mélange (13) en direction d'écoulement (S).

6. Dispositif selon la revendication 1, **caractérisé en ce que** le canal de mélange (13) est constitué par un tube à section constante, derrière la buse (11) en direction d'écoulement (S).

7. Dispositif selon la revendication 1 ou 6, **caractérisé en ce que** le canal de mélange (13) est mené jusque dans le réacteur (2) sous un angle (α) incliné par rapport à la verticale (V).
